(19) Europäisches Patentamt
European Patent Office
Office européen des brevets

(11) EP 3 677 936 A1

# (12) EUROPEAN PATENT APPLICATION

published in accordance with Art. 153(4) EPC

(43) Date of publication:
**08.07.2020 Bulletin 2020/28**

(21) Application number: **18850940.0**

(22) Date of filing: **31.07.2018**

(51) Int Cl.:
***G02B 6/02*** *(2006.01)*

(86) International application number:
**PCT/JP2018/028578**

(87) International publication number:
**WO 2019/044331 (07.03.2019 Gazette 2019/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.08.2017 JP 2017167151**

(71) Applicant: **Fujikura Ltd.**
**Tokyo 135-8512 (JP)**

(72) Inventors:
- **FUNATSU, Tomoki**
**Sakura-shi**
**Chiba 285-8550 (JP)**
- **OHMORI, Kenichi**
**Sakura-shi**
**Chiba 285-8550 (JP)**

(74) Representative: **Plasseraud IP**
**66, rue de la Chaussée d'Antin**
**75440 Paris Cedex 09 (FR)**

## (54) METHOD FOR SETTING HEATING CONDITION, METHOD FOR MANUFACTURING FIBER BRAGG GRATING, AND METHOD FOR MANUFACTURING FIBER LASER SYSTEM

(57) The present invention provides a method for setting a heating condition, the method making it possible to prevent an increase in temperature of a fiber Bragg grating which increase may occur during actual use of the fiber Bragg grating. The method includes: a step (S11) of, on a basis of a correspondence y(Ed) between a temperature coefficient y of a fiber Bragg grating and a demarcation energy Ed of the fiber Bragg grating, determining a lower limit Edmin of the demarcation energy Ed such that the temperature coefficient $\gamma$ is not more than a desired upper limit $\gamma$max; and a step (S12) of setting a heating condition (T, t) for thermal aging of the fiber Bragg grating such that the demarcation energy Ed is not less than the lower limit Edmin.

FIG. 1

S1
START
DERIVE CORRESPONDENCE γ(Ed) BETWEEN TEMPERATURE COEFFICIENT γ AND DEMARCATION ENERGY Ed
S10
DETERMINE LOWER LIMIT Edmin OF DEMARCATION ENERGY Ed SUCH THAT TEMPERATURE COEFFICIENT γ IS NOT MORE THAN DESIRED UPPER LIMIT γmax
S11
SET HEATING CONDITION (T, t) SUCH THAT DEMARCATION ENERGY Ed IS NOT LESS THAN LOWER LIMIT Edmin
S12
END

EP 3 677 936 A1

Printed by Jouve, 75001 PARIS (FR)

## Description

Technical Field

The present invention relates to a method for setting a heating condition for thermal aging of a fiber Bragg grating. The present invention also relates to a method for producing a fiber Bragg grating and a method for producing a fiber laser system.

Background Art

Known is the technique of irradiating a fiber Bragg grating with ultraviolet light of a small amount of energy during production of the fiber Bragg grating in order to prevent an increase in temperature of the fiber Bragg grating which increase may occur during actual use of the fiber Bragg grating (see Patent Literature 1). Further, known is the technique of performing thermal aging on a fiber Bragg grating before shipment in order to prevent a change in reflection characteristics of the fiber Bragg grating which change may occur after the shipment of the fiber Bragg grating (see Patent Literature 2 and Non-patent Literature 1). Citation List

[Patent Literatures]

[Patent Literature 1]
Japanese Patent No. 5298238 (registered on June 21, 2013)
[Patent Literature 2]
Japanese Patent No. 3153083 (registered on January 26, 2001)

[Non-patent Literature]

[Non-patent Literature 1]
T. Erdogan, et al., "Decay of ultraviolet induced fiber Bragg gratings", Journal of Applied Physics 76, 73 (1994)

Summary of Invention

Technical Problem

The technique described in Patent Literature 1 requires irradiation of a fiber Bragg grating with ultraviolet light of a small amount of energy during production of the fiber Bragg grating. Thus, it is difficult to apply the technique described in Patent Literature 1 to the production of a high-reflective fiber Bragg grating. Thus, it is difficult to realize, with use of the technique described in Patent Literature 1, a high-reflective fiber Bragg grating that prevents an increase in temperature which increase may occur during actual use of the high-reflective fiber Bragg grating. Further, the technique described in Patent Literature 2 enables shipment of a fiber Bragg grating that prevents a change in reflection characteristics which change may occur after shipment, but does not enable shipment of a fiber Bragg grating that prevents an increase in temperature which increase may occur during actual use of the fiber Bragg grating.

The present invention has been attained in view of the above problem, and it is a main object of the present invention to realize a method for setting a heating condition for thermal aging of a fiber Bragg grating, the method making it possible to prevent an increase in temperature of a fiber Bragg grating which increase may occur during actual use of the fiber Bragg grating. It is also a main object of the present invention to realize a method for producing a fiber Bragg grating and a method for producing a fiber laser system, both of which make it possible to prevent an increase in temperature of a fiber Bragg grating which increase may occur during actual use of the fiber Bragg grating.

Solution to Problem

A method for setting a heating condition in accordance with an aspect of the present invention is a method for setting a heating condition for thermal aging of each of fiber Bragg gratings, the method including: a step of, on a basis of a correspondence y(Ed) between a temperature coefficient y of each of the fiber Bragg gratings and a demarcation energy Ed of each of the fiber Bragg gratings, determining a lower limit Edmin of the demarcation energy Ed such that the temperature coefficient $\gamma$ is not more than a desired upper limit $\gamma$max; and a step of setting the heating condition for thermal aging of each of the fiber Bragg gratings such that the demarcation energy Ed is not less than the lower limit Edmin.

Further, a method for producing a fiber Bragg grating in accordance with an aspect of the present invention includes a setting step of setting a heating condition for thermal aging of a fiber Bragg grating according to a setting method in accordance with any one of the above-described aspects of the present invention; and a thermal aging step of subjecting the fiber Bragg grating to thermal aging such that the heating condition set in the setting step is met.
Still further, a method for producing a fiber laser system in accordance with an aspect of the present invention is a method for producing a fiber laser system which includes at least one fiber laser unit, the fiber laser unit including an excitation light source, an amplifying fiber, and two fiber Bragg gratings which cause the amplifying fiber to serve as a resonator and have different reflectances, the method including a step of producing each of the two fiber Bragg gratings by using the method for producing a fiber Bragg grating in accordance with any one of the above-described aspects of the present invention.

Advantageous Effects of Invention

According to the present invention, it is possible to realize a method for setting a heating condition for thermal aging of a fiber Bragg grating, the method making it possible to prevent an increase in temperature of a fiber Bragg grating which increase may occur during actual use of the fiber Bragg grating. It is also possible to realize a method for producing a fiber Bragg grating and a method for producing a fiber laser system, both of which make it possible to prevent an increase in temperature of a fiber Bragg grating which increase may occur during actual use of the fiber Bragg grating.

Brief Description of Drawings

Fig. 1 is a flowchart showing a flow of a heating condition setting method in accordance with Embodiment 1 of the present invention.
Fig. 2 shows examples of application of the heating condition setting method shown in Fig. 1. (a) of Fig. 2 is a graph showing plots of values of a demarcation energy Ed and of a temperature coefficient y on an Ed-y plane, for a high-reflective fiber Bragg grating having a reflectance of 99.3%. (b) of Fig. 2 is a graph showing plots of values of a demarcation energy Ed and of a temperature coefficient y on an Ed-y plane, for a low-reflective fiber Bragg grating having a reflectance of 10%.
Fig. 3 is a flowchart showing a flow of a heating condition setting method in accordance with Embodiment 2 of the present invention.
Fig. 4 shows examples of application of the heating condition setting method shown in Fig. 3. (a) of Fig. 4 is a graph showing plots of time series ICC1(t), ICC2(t), and ICC3(t) on a t-ICC plane. (b) of Fig. 4 is a graph showing plots of time series NCC1(t), NCC2(t), and NCC3(t) on a t-NCC plane.
Fig. 5 shows examples of application of the heating condition setting method shown in Fig. 3. Fig. 5 is a graph showing plots of time series (Ed1(t), NCC1(t)), (Ed2(t), NCC2(t)), and (Ed3(t), NCC3(t)) on an Ed-NCC plane.
Fig. 6 is a perspective view illustrating a typical example of a fiber Bragg grating to which the respective heating condition setting methods shown in Figs. 1 and 3 can be applied.
Fig. 7 is a flowchart showing a flow of a method for producing a fiber laser system in accordance with Embodiment 3 of the present invention.
Fig. 8 is a diagram illustrating the configuration of a first typical example fiber laser system to which the fiber laser system production method shown in Fig. 7 can be applied.
Fig. 9 is a diagram illustrating the configuration of a second typical example fiber laser system to which the fiber laser system production method shown in Fig. 7 can be applied.

Description of Embodiments

[Principle of the present invention]

A temperature coefficient $\gamma$ [°C/W] is one of indicators of long-term reliability of a fiber Bragg grating. The temperature coefficient $\gamma$ is defined as a slope $d\tau/dP$, where a temperature $\tau$ [°C] of a fiber Bragg grating is regarded as a function $\tau(P)$ of power P [W] of light guiding through the fiber Bragg grating. A fiber Bragg grating having a high temperature coefficient $\gamma$ is likely to have a high temperature during actual use of the fiber Bragg grating and thus have low long-term reliability. On the other hand, a fiber Bragg grating having a low temperature coefficient $\gamma$ is less likely to have a high temperature during actual use of the fiber Bragg grating and thus have high long-term reliability.
The inventors of the present invention found that a fiber Bragg grating subjected to thermal aging had a correspondence $\gamma(Ed)$, represented by a particular function, between the temperature coefficient $\gamma$ [°C/W] and the demarcation energy Ed [eV]. More specifically, the inventors of the present invention found that a fiber Bragg grating subjected to thermal aging had in at least part of a region a linear correspondence $\gamma$(Ed), represented by a linear function, between the temperature coefficient $\gamma$ [°C/W] and the demarcation energy Ed [eV]. The linear function is expressed by the following expression (1):

$$\gamma(E_d) = \alpha E_d + \beta \qquad \cdots (1)$$

where $\alpha$ is a negative constant, $\beta$ is a positive constant, and the constants $\alpha$ and $\beta$ are determined depending on the structure of a fiber Bragg grating.

The demarcation energy Ed of the fiber Bragg grating subjected to thermal aging is given by the following expression (2):

$$Ed = kTln(v_0 t)/e \qquad \cdots (2)$$

where k [eV/K] is a Boltzmann's constant, e is an elementary charge, $\nu$0 is a release rate, T is a heating temperature [K], and t is a heating time [sec]. Hereinafter, the heating temperature T and the heating time t are collectively referred to as a heating condition (T, t).

The Boltzmann's constant k and the elementary charge e are universal constants, and the release rate $\nu$0 is a constant which is determined depending on the structure of a fiber Bragg grating. Thus, when the heating condition (T, t) for thermal aging is determined, the demarcation energy Ed of the fiber Bragg grating subjected to thermal aging is determined by the expression (2). Then, when the demarcation energy Ed of the fiber Bragg grating subjected to thermal aging is determined, the temperature coefficient $\gamma$ of the fiber Bragg grating subjected to thermal aging can be found by the expression (1). Conversely, when the temperature coefficient y of the fiber Bragg grating subjected to thermal aging is determined, the demarcation energy Ed of the fiber Bragg grating subjected to thermal aging is determined by the expression (1). Thus, when the demarcation energy Ed of the fiber Bragg grating subjected to thermal aging is determined, the heating condition (T, t) for thermal aging can be found by the expression (2) above.

By using the above relation, it is possible to set the heating condition (T, t) for thermal aging such that the temperature coefficient $\gamma$ of the fiber Bragg grating subjected to thermal aging is not more than a desired upper limit $\gamma$max. This will be described below through more specific embodiments.

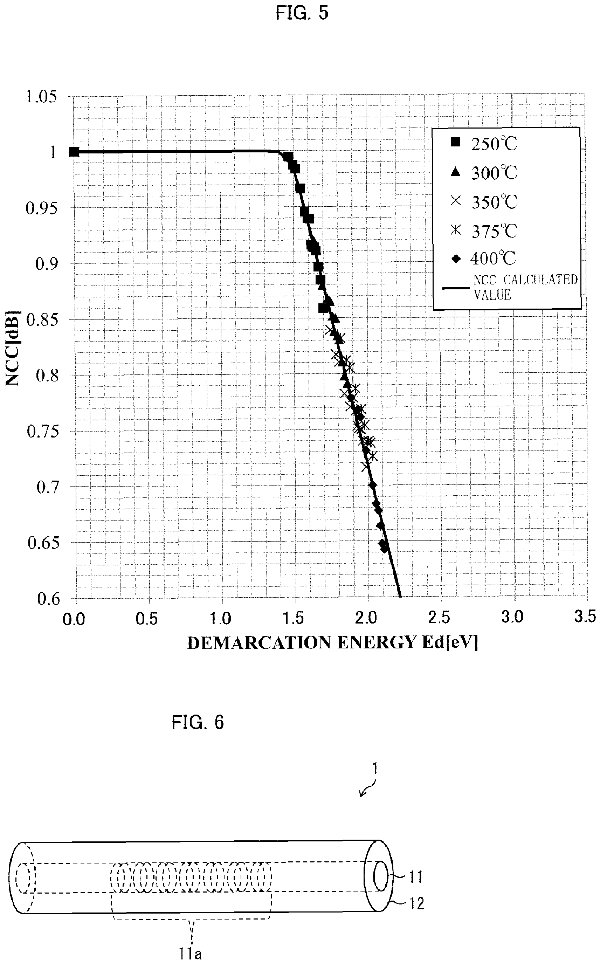

Note that, in the embodiments in accordance with the present invention, a fiber Bragg grating refers to an optical fiber that includes a core and a grating which is contained in the core. Fig. 6 is a perspective view illustrating a typical fiber Bragg grating 1. In Fig. 6, a symbol indicated by 1 denotes a fiber Bragg grating, a symbol indicated by 11 denotes a core, and a symbol indicated by 12 denotes a cladding. A symbol indicated by 11a denotes a grating contained in the core 11.

[Embodiment 1]

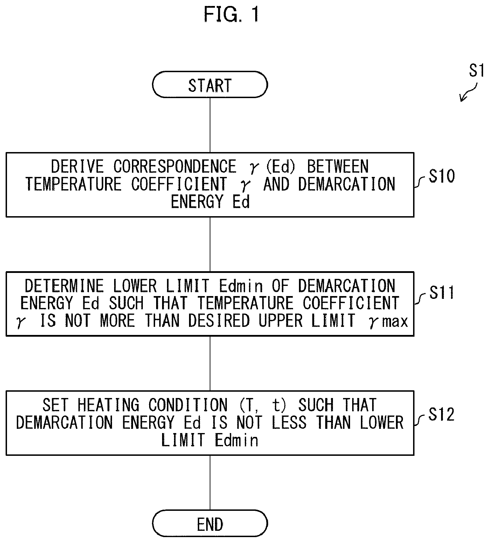

A heating condition setting method S1 in accordance with Embodiment 1 of the present invention will be described with reference to Fig. 1. Fig. 1 is a flowchart showing a flow of the heating condition setting method S1 The heating condition setting method S1, which is a method for setting a heating condition for thermal aging of a fiber Bragg grating, includes steps S10 to S12 described below. Note that in Embodiment 1, the release rate $\nu$0 is assumed to be known. In a case where the release rate $\nu$0 is unknown, the release rate $\nu$0 is determined by carrying out step S20 included in a heating condition setting method S2 before step S21, and the steps S10 and S11, and step S22 (described below) are carried out, as will be described later in Embodiment 2.

The step S10 is a step of deriving the correspondence $\gamma$(Ed) between the temperature coefficient $\gamma$ and the demarcation energy Ed. As has been described earlier, the correspondence $\gamma$(Ed) can be expressed by the expression (1). As such, in the step S10, the correspondence $\gamma$(Ed) is derived by deriving the constants $\alpha$ and $\beta$ which are contained in the expression (1).

For example, the derivation of the constants $\alpha$ and $\beta$ in the step S10 can be carried out as described below. (A) First, n fiber Bragg gratings (n is a natural number of 2 or more), i.e., FBG1, FBG2, ..., FBGn, are prepared. Here, FBG1, FBG2, ..., FBGn are fiber Bragg gratings having equal reflectances. (B) Next, each FBGi is subjected to thermal aging until the demarcation energy Ed of the FBGi reaches a predetermined value Edi (i = 1 to n). Note, here, that Ed1 to Edn are assumed to be mutually different values. (C) Then, a value $\gamma i$ of the temperature coefficient y of each FBGi having been subjected to thermal aging is measured (i = 1 to n). (D) Finally, regarding a particular function representing the correspondence $\gamma$(Ed), values of the constants included in the function are set such that the function approximates at a certain accuracy or best approximates a set of (Ed1, $\gamma$1), (Ed2, $\gamma$2), ..., (Edn, $\gamma$n). Specifically, regarding a linear function representing the correspondence $\gamma$(Ed) and expressed by the expression (1) above, the constants $\alpha$ and $\beta$ included in the expression (1) above are set such that the linear function approximates at a certain accuracy or best approximates the set of (Ed1, $\gamma$1), (Ed2, $\gamma$2), ..., (Edn, $\gamma$n). For example, the setting of the constants $\alpha$ and $\beta$ can be achieved by seeking values of the constants $\alpha$ and $\beta$ with which a graph of the linear function expressed by the expression (1) approximates at a certain accuracy or best approximates the set of points (Ed1, $\gamma$1), (Ed2, $\gamma$2), ..., (Edn, $\gamma$n) on an Ed-y plane, by trying slightly different values of the constants $\alpha$ and $\beta$. Alternatively, the setting of the constants $\alpha$ and $\beta$ can be achieved by the least squares method.

In the step S11, on a basis of the correspondence $\gamma$(Ed), expressed by the expression (1), between the temperature coefficient $\gamma$ and the demarcation energy Ed, a lower limit Edmin of the demarcation energy Ed is determined such that the temperature coefficient $\gamma$ is not more than the desired upper limit $\gamma$max. For example, the determination of the lower limit Edmin in the step S11 can be carried out as follows. That is, an equation which is obtained by substituting the desired upper limit $\gamma$max in the expression (1) is solved for Ed, and then the solution is set to the lower limit Edmin. Note that the "desired upper limit ymax" as used herein refers, for example, to an upper limit $\gamma$max which is set as appropriate by a user of the heating condition setting method S1.

In the step S12, the heating condition (T, t) is set, on a basis of a relation between the demarcation energy Ed and the heating temperature T and the heating time t, such that the demarcation energy Ed expressed by the expression (2) is not less than the lower limit Edmin which has been determined in the step S11. For example, the setting of the heating condition (T, t) in the step S12 can be carried out as follows. That is, the heating temperature T is determined as appropriate, an equation obtained by substituting the lower limit Edmin determined in the step S11 in the expression (2) above is solved for t, and then the solution is set to the heating time t. Alternatively, the heating time t is determined as appropriate, an equation obtained by substituting the lower limit Edmin determined in the step S11 in the expression (2) is solved for T, and then the solution is set to the heating temperature T.

As described above, according to the heating condition setting method S1, the heating condition (T, t) for thermal aging can be set such that the temperature coefficient $\gamma$ of a fiber Bragg grating subjected to thermal aging is not more than the desired upper limit $\gamma$max, that is, such that the demarcation energy Ed is not less than the lower limit Edmin. Further, according to the method for producing a fiber Bragg grating, which method includes: the setting step of setting the heating condition (T, t) according to the heating condition setting method S1; and the thermal aging step of performing thermal aging on the fiber Bragg grating under the set heating condition (T, t), it is possible to produce the fiber Bragg grating that prevents an increase in temperature which may occur during actual use of the fiber Bragg grating.

Note that the step S10 described above needs to be carried out in a case where the correspondence $\gamma$(Ed) between the temperature coefficient $\gamma$ and the demarcation energy Ed is unknown. As such, the step S10 described above can be omitted in a case where the correspondence $\gamma$(Ed) between the temperature coefficient $\gamma$ and the demarcation energy Ed is known.

[Examples of application]

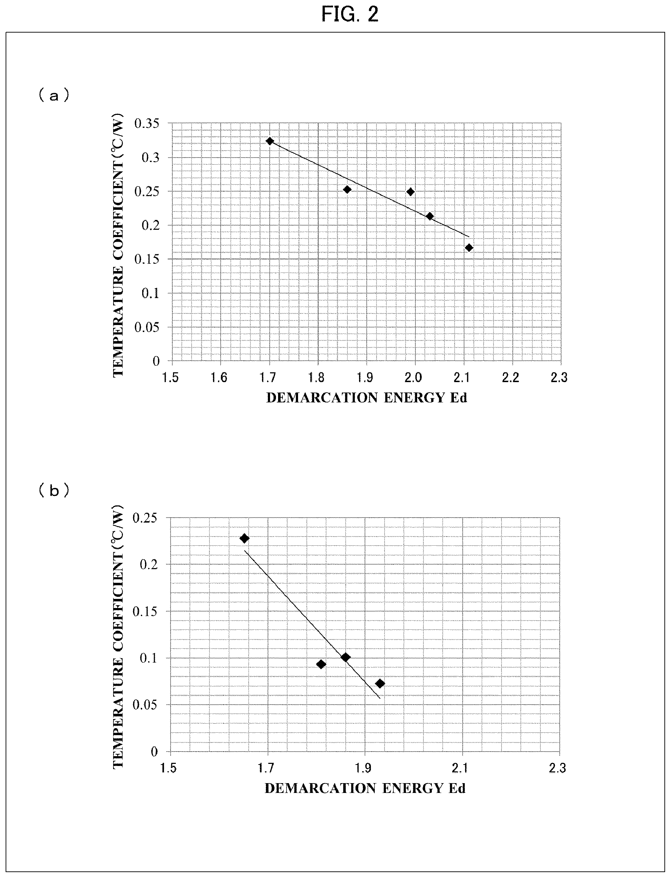

Examples of application of the heating condition setting method S1 will be described below with reference to Table 1 and Fig. 2.

Table 1 is a list showing the heating temperature T, the heating time t, the demarcation energy Ed, and the temperature coefficient y of each of (i) a high-reflective fiber Bragg grating having a reflectance of 99.3% and (ii) a low-reflective fiber Bragg grating having a reflectance of 10%. In Table 1, the heating temperature T and heating time t shown in the first column and in the second column, respectively, are a heating condition for aging performed in (B) of the step S10 to obtain the fiber Bragg grating having the demarcation energy Ed shown in the third column. In Table 1, the temperature coefficient y shown in the fourth column is a temperature coefficient $\gamma$ of the fiber Bragg grating having the demarcation energy Ed shown in the third column, and is a value measured in (C) of the step S10 described above. Note that in Table 1, the heating temperature T is expressed in the unit of °C, and the heating time t is expressed in the unit of minute.

[Table 1]

| Product type | Temperature [°C] | Time [min] | Ed | Temperature coefficient [°C /W] |
|---|---|---|---|---|
| FBG (Reflectance of 99.3%) | 250 | 30 | 1.70 | 0.32 |
| | 300 | 30 | 1.86 | 0.25 |
| | 350 | 15 | 1.99 | 0.25 |
| | 375 | 8 | 2.03 | 0.21 |
| | 400 | 8 | 2.11 | 0.17 |
| FBG (Reflectance of 10%) | 250 | 30 | 1.65 | 0.23 |
| | 300 | 30 | 1.81 | 0.093 |
| | 350 | 4 | 1.86 | 0.10 |
| | 350 | 15 | 1.93 | 0.072 |

(a) of Fig. 2 is a graph showing plots of the values of the demarcation energy Ed and of the temperature coefficient γ (shown in Table 1) on an Ed-γ plane, for the high-reflective fiber Bragg grating having a reflectance of 99.3%. (a) of Fig. 2 also shows a graph of a linear function γ(Ed) derived in (D) of the step S10 as a linear function γ(Ed) that best approximates those plots. For example, in a case where the upper limit γmax of the temperature coefficient γ is 0.2°C/W, it can be seen from (a) of Fig. 2 that the lower limit Edmin of the demarcation energy Ed determined in the step S11 is 2.06 eV.

(b) of Fig. 2 is a graph showing plots of the values of the demarcation energy Ed and of the temperature coefficient γ (shown in Table 1) on an Ed-γ plane, for the low-reflective fiber Bragg grating having a reflectance of 10%. (b) of Fig. 2 also shows a graph of a linear function γ(Ed) derived in the step S10 as a linear function γ(Ed) that best approximates those plots. For example, in a case where the upper limit γmax of the temperature coefficient γ is 0.1°C/W, it can be seen from (b) of Fig. 2 that the lower limit Edmin of the demarcation energy Ed determined in the step S11 is 1.86 eV.

[Embodiment 2]

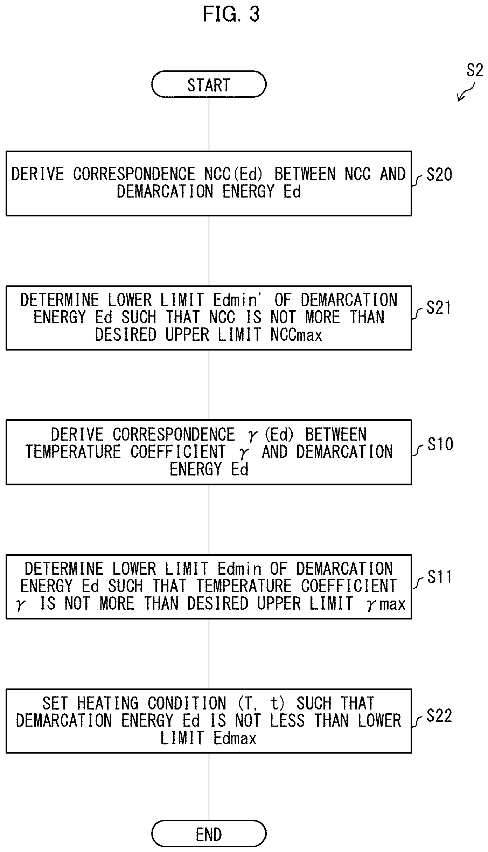

A heating condition setting method S2 in accordance with Embodiment 2 of the present invention will be described with reference to Fig. 3. Fig. 3 is a flowchart showing a flow of the heating condition setting method S2. The heating condition setting method S2 is a method obtained by omitting the step S12 from the heating condition setting method S1, adding the steps S20 and S21 before the step S10, and adding the step S22 after the step S11. This means that, in the heating condition setting method S2, the step S20, the step S21, the step S10, the step S11, and the step S22 are carried out in this order.

In the step S20, derived is a correspondence NCC(Ed) between a normalized integrated coupling constant NCC and the demarcation energy Ed. Note, here, that the normalized integrated coupling constant NCC(Ed) is obtained by normalizing an integrated coupling constant (ICC) before heating (time t = 0). According to Non-Patent Literature 1, the correspondence NCC(Ed) can be expressed by the following expression (3):

$$NCC(E_d) = \frac{1}{2}\left[1 + \frac{c}{b}\ln\left(\frac{e^{\frac{E_d+b}{c}} + e^{\frac{a}{c}}}{e^{\frac{E_d}{c}} + e^{\frac{a+b}{c}}}\right)\right] \quad \cdots (3)$$

In the step S20, the constants a, b, c, and ν0 included in the expression (3) are derived. Note that ν0 is included in Ed given by the expression (2).

For example, the derivation of the constants a, b, c, and ν0 in the step S20 can be carried out as described below. (A) First, n fiber Bragg gratings (n is a natural number of 2 or more), i.e., FBG1, FBG2, ..., FBGn, are prepared. Here, FBG1, FBG2, ..., FBGn are fiber Bragg gratings having equal reflectances. (B) Subsequently, each FBGi (i = 1 to n) is subjected to thermal aging at the temperature Ti. During thermal aging, a value Tmini of a minimum transmission coefficient Tmin at each time t is measured. Here, the minimum transmission coefficient Tmin refers to a minimum value obtained when the transmission coefficient T is regarded as a function T(λ) of a wavelength λ. (C) Subsequently, a value ICCi(t) of the integrated coupling constant (ICC) of each FBGi at each time t is calculated (i = 1 to n). Note that between the minimum transmission coefficient Tmin and the integrated coupling constant ICC, there is a relation expressed by the following expression (4):

$$ICC = tanh^{-1}\sqrt{1 - T_{min}} \quad \cdots (4)$$

For the calculation of the ICCi(t), this relation is used. (D) Subsequently, a value NCCi(t) of the normalized integrated coupling constant NCC of each FBGi at each time t is calculated. Note that between the integrated coupling constant ICC and the normalized integrated coupling constant NCC, there is a relation expressed by the following expression (5):

$$NCC = \frac{ICC}{ICC_{t=0}} \quad \cdots (5)$$

For the calculation of the NCCi(t), this relation is used. (E) Subsequently, the demarcation energy Edi(t) of each FBGi at each time t is calculated. For the calculation of the Edi(t), the expression (2) above is used. (F) Finally, regarding a particular function representing the correspondence NCC(Ed), values of the constants included in the function are set such that the function approximates at a certain accuracy or best approximates a set of (Ed1(t), NCC1(t)), (Ed2(t), NCC2(t)), ..., (Edn(t), NCCn(t)). Specifically, regarding the function representing the correspondence NCC(Ed) and expressed by the expression (3), the constants a, b, c, and ν0 included in the expression (3) above are set such that the function approximates at a certain accuracy or best approximates the set of (Ed1(t), NCC1(t)), (Ed2(t), NCC2(t)), ..., (Edn(t), NCCn(t)). For example, the setting of the constants a, b, c, and ν0 can be achieved by seeking values of the constants a, b, c, and ν0 with which of a graph of the function expressed by the expression (3) approximates at a certain accuracy or best approximates the set of points (Ed1(t), NCC1(t)), (Ed2(t), NCC2(t)), ..., (Edn(t), NCCn(t)) on an Ed-NCC plane, by trying slightly different values of the constants a, b, c, and v0. Alternatively, the setting of the constants a, b, c, and ν0 can be achieved by the least squares method.

In the step S21, a lower limit Edmin' of the demarcation energy Ed is determined, on a basis of a correspondence NCC(Ed), expressed by the expression (3), between the normalized integrated coupling constant NCC and the demarcation energy Ed, such that the normalized integrated coupling constant NCC is not more than a desired upper limit NCCmax. For example, the determination of the lower limit Edmin' in the step S21 can be carried out as follows. That is, an equation obtained by substituting the desired upper limit NCCmax in the expression (3) is solved for Ed, and then the solution is set to the lower limit Edmin'. Note that the "desired upper limit NCCmax" as used herein refers, for example, to an upper limit NCCmax which is set as appropriate by a user of the heating condition setting method S2.

In the step S22, the heating condition (T, t) is set, on a basis of a relation, expressed by the expression (2), between the demarcation energy Ed and the heating temperature T and the heating time t, such that the demarcation energy Ed is not less than Edmax, which is larger one of (a) the lower limit Edmin determined in the step S11 and (b) the lower limit Edmin' determined in the step S21. For example, the setting of the heating condition (T, t) in the step S22 can be carried out as follows. That is, the heating temperature T is determined as appropriate, an equation obtained by substituting Edmax in the expression (2) is solved for t, and then the solution is set to the heating time t. Alternatively, the heating time t is determined as appropriate, an equation obtained by substituting Edmax in the expression (2) is solved for T, and then the solution is set to the heating temperature T.

As described above, according to the heating condition setting method S2, the heating condition (T, t) for thermal aging can be set such that the temperature coefficient $\gamma$ of a fiber Bragg grating subjected to thermal aging is not more than the desired upper limit $\gamma$max and such that the normalized integrated coupling constant NCC of a fiber Bragg grating subjected to thermal aging is not more than the desired upper limit NCCmax. Further, according to a method for producing a fiber Bragg grating, which method includes: the setting step of setting the heating condition (T, t) according to the heating condition setting method S2; and the thermal aging step of performing thermal aging on the fiber Bragg grating under the set heating condition (T, t), it is possible to produce the fiber Bragg grating that prevents an increase in temperature which may occur during actual use of the fiber Bragg grating and prevents a change in reflection characteristics which change may occur after shipment.

Note that the step S10 described above needs to be carried out in a case where the correspondence $\gamma$(Ed) between the temperature coefficient $\gamma$ and the demarcation energy Ed is unknown. As such, the step S10 described above can be omitted in a case where the correspondence $\gamma$(Ed) is known. Similarly, the step S20 described above needs to be carried out in a case where the correspondence NCC(Ed) between the normalized integrated coupling constant NCC and the demarcation energy Ed is unknown. As such, the step S20 described above can be omitted in a case where the correspondence NCC(Ed) is known.

Further, in a case where the value of νO (release rate) is unknown, a value of ν0 derived in the step S20 is used as the value of ν0 to be used in the step S10. In such a case, as illustrated in Fig. 3, the step S20 is carried out prior to the step S10. The step S21 can be carried out at any time, provided that the values of a, b, and c are determined in the step S20. That is, the step S21 can be carried out before the step S10. Alternatively, the step S21 can be carried out after the step S10 and before the step S11. Further alternatively, the step S21 can be carried out after the step S11. In a case where the value of ν0 (release rate) is known, the steps S20 and S21 can be carried out after the steps S10 and S11 are carried out.

[Examples of application]

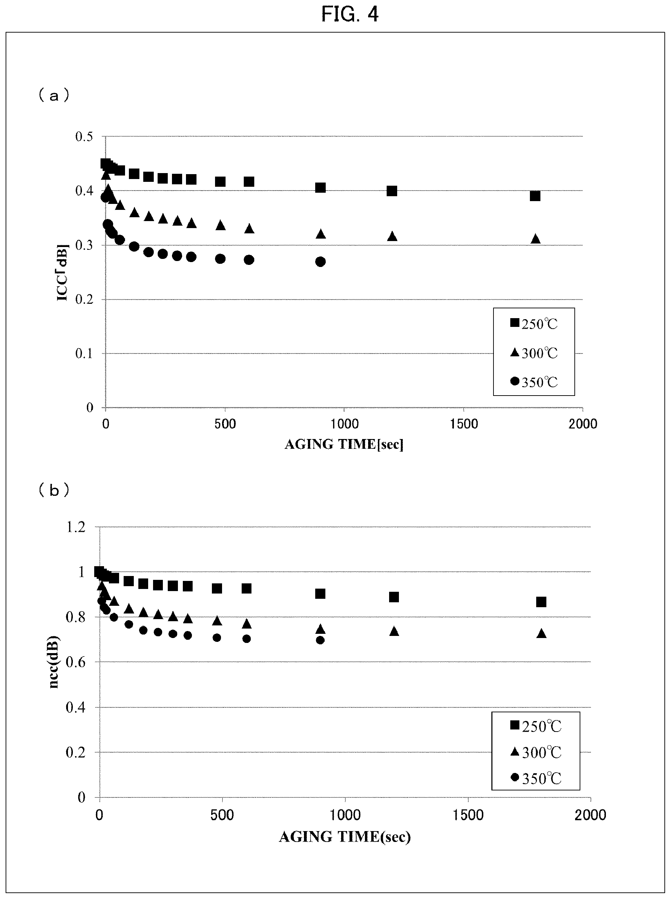

Examples of application of the heating condition setting method S2 will be described with reference to Fig. 4, Fig. 5, and Table 2. The application examples in Embodiment 2 are application examples in a case where FBG1, FBG2, and FBG3 are subjected to thermal aging at T1 = 250, T2 = 300, and T3 = 350, respectively, in the step S20.

(a) of Fig. 4 is a graph showing plots of time series ICC1(t), ICC2(t), and ICC3(t) obtained in (C) of the above-described step S20 on a t-NCC plane. (b) of Fig. 4 is a graph showing plots of time series NCC1(t), NCC2(t), and NCC3(t) obtained in (D) of the above-described step S20 on a t-ICC plane.

Fig. 5 is a graph showing plots of the time series (Ed1(t), NCC1(t)), (Ed2(t), NCC2(t)), and (Ed3(t), NCC3(t)) referred to in (F) of the above-described step S20 on an Ed-NCC plane. Fig. 5 also shows a graph of a relation NCC(Ed) derived in (F) of the above-described step S20 as a relation NCC(Ed) that best approximates those plots. The relation NCC(Ed) is set such that, in the relation NCC(Ed) defined by the expression (3), the constants a, b, c, and ν0 are as shown in Table 2. For example, in a case where the upper limit NCCmax of the normalized integrated coupling constant NCC is 0.8 dB, it can be seen from Fig. 5 that the lower limit Edmin' of the demarcation energy Ed determined in the step S21 is 1.85 eV.

[Table 2]

| ν0 | $1.30 \times 10^{13}$ |
|---|---|
| a | 2.4 |
| b | 0.92 |
| c | -0.02 |

[Embodiment 3]

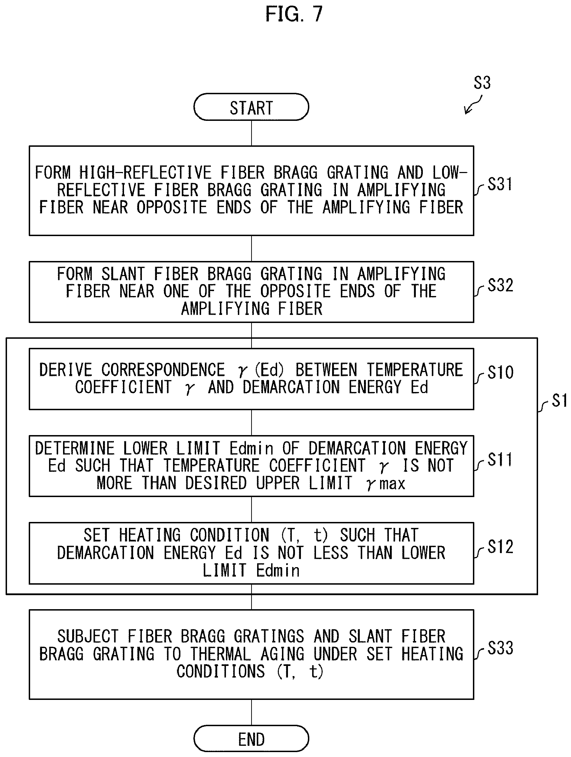

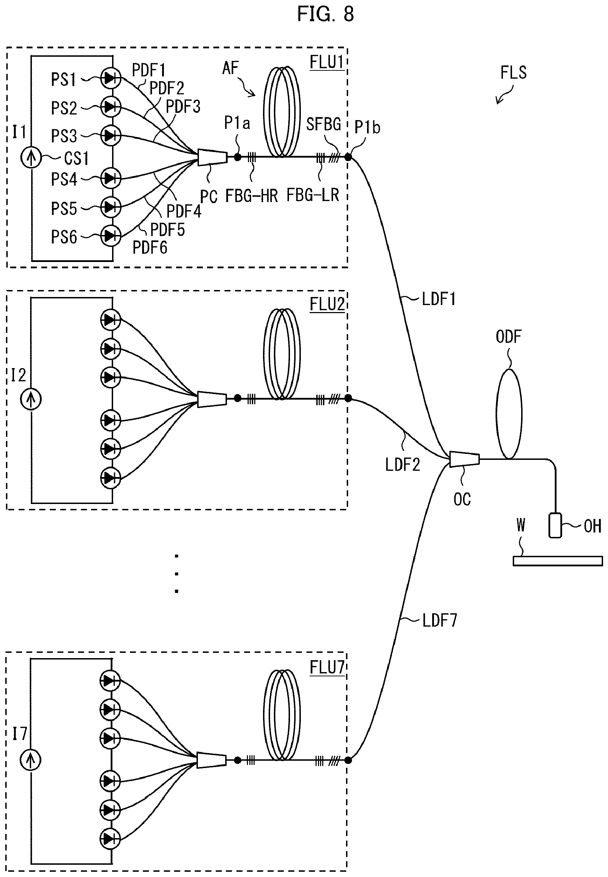

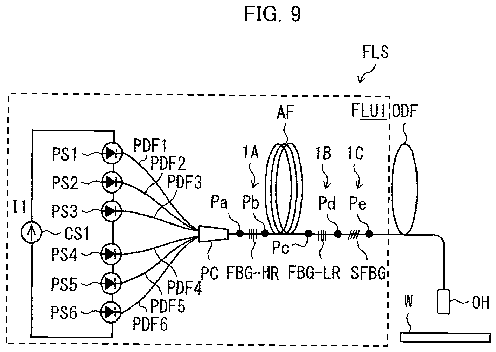

A fiber laser system production method S3 in accordance with Embodiment 3 of the present invention will be described with reference to Figs. 7 to 9. Fig. 7 is a flowchart showing a flow of the production method S3. Fig. 8 is a diagram illustrating the configuration of a fiber laser system FLS as a first typical example fiber laser system to which the production method S3 can be applied. Fig. 9 is a diagram illustrating the configuration of a fiber laser system FLS as a second typical example fiber laser system to which the production method S3 can be applied.

In Embodiment 3, the first typical example fiber laser system FLS will be described, and then the production method S3 for producing the fiber laser system FLS will be described. Further, the fiber laser system FLS will be described, and then the production method S3 for producing the fiber laser system FLS will be described.

(First typical example fiber laser system FLS)

The first typical example fiber laser system FLS, which is a laser device for processing a workpiece W to be processed, includes n fiber laser units FLU1 to FLUn, n laser delivery fibers LDF1 to LDFn, an output combiner OC, an output delivery fiber ODF, and an output head OH (see Fig. 8). The fiber laser units FLU1 to FLUn and the laser delivery fibers LDF1 to LDFn correspond one-to-one to each other. Here, n is any natural number of 1 or more and represents the number of the fiber laser units FLU1 to FLUn and the number of the laser delivery fibers LDF1 to LDFn. Note that Fig. 5 illustrates an example of how the fiber laser system FLS is configured in a case where n = 7. Note also that the output combiner OC includes n input ports and one (1) output port. The output combiner OC combines n laser beams supplied through the input ports into one laser beam, and then sends out the combined laser beam through the output port.

A fiber laser unit FLUi (i is a natural number of not less than 1 to not more than n) generates a laser beam. In Embodiment 3, forward excitation fiber lasers are used as the fiber laser units FLU1 to FLUn. The fiber laser unit FLUi is connected to an input end of a corresponding laser delivery fiber LDFi. A connecting point Pib is a point at which an output end of the fiber laser unit FLUi (i.e., an output end of an amplifying fiber AFi) and an input end of the laser delivery fiber LDFi are connected by fusion splicing. A laser beam generated by the fiber laser unit FLUi is supplied to the laser delivery fiber LDFi.

The laser delivery fiber LDFi guides a laser beam generated by the corresponding fiber laser unit FLUi. Each of the laser delivery fibers LDF1 to LDFn may be a single mode fiber or a few mode fiber having 10 or less modes.

In Embodiment 3, the few mode fiber is used as each of the laser delivery fibers LDF1 to LDFn. An output end of the laser delivery fiber LDFi is connected to an input port of the output combiner OC. The laser beam generated by the fiber laser unit FLUi and guided by the laser delivery fiber LDFi is supplied to the output combiner OC through the input port of the output combiner OC.

The output combiner OC combines together the laser beams generated by the respective fiber laser units FLU1 to FLUn and guided by the respective laser delivery fibers LDF1 to LDFn. The output port of the output combiner OC is connected to the input end of the output delivery fiber ODF. A combined laser beam obtained by the output combiner OC is supplied to the output delivery fiber ODF. That is, the incident surface of the output delivery fiber ODF is coupled to a plurality of the fiber laser unit FLUi via the output combiner OC.

The output delivery fiber ODF guides the combined laser beam obtained by the output combiner OC. In Embodiment 3, a multi-mode fiber is used as the output delivery fiber ODF. An output end of the output delivery fiber ODF is connected to the output head OH. Further, provided between the output head OH and the workpiece W is a spatial optical system (e.g., a convex lens (not illustrated in Fig. 5)) for focusing a laser beam emitted from the output head OH onto the surface of the workpiece W. The combined laser beam obtained by the output combiner OC is emitted from the output head OH, so that the workpiece W is irradiated with the laser beam in a state of being focused by the spatial optical system.

Note that in Embodiment 3, the output combiner OC is employed as an example of a combining section recited in the claims. However, in an aspect of the present invention, a spatial optical system including a plurality of convex lenses can be employed as an example of the combining section recited in the claims. In a case where the spatial optical system is constituted by n convex lenses, the convex lenses need only be arranged such that they focus laser beams emitted from the respective laser delivery fibers LDFi of the fiber laser units FLUi and couple the focused laser beams to a core of the output delivery fiber ODF.

(Configuration of fiber laser units)

The configuration of the fiber laser unit FLU1 included in the fiber laser system FLS will also be described with reference to Fig. 8. Note that the fiber laser units FLU2 to FLUn are configured in the same manner as the fiber laser unit FLU1.

The fiber laser unit FLUI, which is a forward excitation fiber laser, includes m excitation light sources PS1 to PSm, m excitation delivery fibers PDF1 to PDFm, an excitation combiner PC, a high-reflective fiber Bragg grating FBG-HR, an amplifying fiber AF, a low-reflective fiber Bragg grating FBG-LR, and a slant fiber Bragg grating SFBG. That is, the fiber laser unit FLU1 is a resonator-type fiber laser unit. The excitation light sources PS1 to PSm and the excitation delivery fibers PDF1 to PDFm correspond one-to-one to each other. Here, m is any natural number of 2 or more and represents the number of the excitation light sources PS1 to PSm and the number of the excitation delivery fibers PDF1 to PDFm. Note that Fig. 8 illustrates an example of the configuration the fiber laser unit FLU1 in a case where m = 6. Note that, in Embodiment 3, the high-reflective fiber Bragg grating FBG-HR is provided near an input end of the amplifying fiber AF, the low-reflective fiber Bragg grating FBG-LR is provided near the output end of the amplifying fiber AF, and the slant fiber Bragg grating SFBG is provided between the low-reflective fiber Bragg grating FBG-LR and the output end of the amplifying fiber AF.

The excitation light source PSj (j is a natural number of not less than 1 to not more than m) generates excitation light. In Embodiment 3, laser diodes are used as the excitation light sources PS1 to PSm. The excitation light source PSj is connected to an input end of the corresponding excitation delivery fiber PDFj. Excitation light generated by the excitation light source PSj is supplied to the excitation delivery fiber PDFi.

The excitation delivery fiber PDFj guides the excitation light beam generated by the corresponding excitation light source PSj. An output end of the excitation delivery fiber PDFj is connected to an input port of the excitation combiner PC. The excitation light generated by the excitation light source PSj and guided by the excitation delivery fiber PDFj is supplied to the excitation combiner PC through the input port of the excitation combiner PC.

The excitation combiner PC combines together excitation light beams generated by the respective excitation light sources PS1 to PSm and guided by the respective excitation delivery fibers PDF1 to PDFm. An output port of the excitation combiner PC is connected to an input end of the amplifying fiber AF via the high-reflective fiber Bragg grating FBG-HR. The connecting point Pia is a point at which an output port of the excitation combiner PC and the input end of the amplifying fiber AF are connected by fusion splicing. Of the excitation light beams combined by the excitation combiner PC, the excitation light beam having passed through the high-reflective fiber Bragg grating FBG-HR is supplied to the amplifying fiber AF.

The amplifying fiber AF generates a laser beam from the excitation light beam having passed through the high-reflective fiber Bragg grating FBG-HR. In Embodiment 3, a double-cladding fiber (Raman gain coefficient = $1 \times 10^{-13}$ [1/W]) whose core is doped with a rare-earth element (e.g., Yb) is used as the amplifying fiber AF. The excitation light beam having passed through the high-reflective fiber Bragg grating FBG-HR is used to maintain the rare-earth element in a population inversion state. The output end of the amplifying fiber AF is connected to the input end of the laser delivery fiber LDF1 via the low-reflective fiber Bragg grating FBG-LR. The high-reflective fiber Bragg grating FBG-HR serves as a mirror at a certain wavelength $\lambda$ (e.g., 1060 nm) (the reflectance is, for example, 99%), whereas the low-reflective fiber Bragg grating FBG-LR serves as a half mirror at that wavelength $\lambda$ (the reflectance is, for example, 10%). Thus, the amplifying fiber AF constitutes, together with the high-reflective fiber Bragg grating FBG-HR and the low-reflective fiber Bragg grating FBG-LR, a resonator for oscillating a laser beam having a wavelength $\lambda$. Of the laser beams generated by the amplifying fiber AF, the laser beam having passed through the low-reflective fiber Bragg grating FBG-LR is supplied to the laser delivery fiber LDF1.

In the slant fiber Bragg grating SFBG, coupling, to the cladding, of light belonging to a wavelength band which includes the stimulated Raman scattered light having a wavelength corresponding to the wavelength of the laser beam generated by the amplifying fiber AF, is made with a higher priority than coupling, to the cladding, of light not belonging to the wavelength band. As a result, the slant fiber Bragg grating SFBG is configured to lose the stimulated Raman scattered light with a higher priority than the laser beam.

Thus, the stimulated Raman scattered light caused by the laser beam generated by the amplification fiber AF makes a transition to the cladding during the passage through the slant fiber Bragg grating SFBG. Thus, the slant fiber Bragg grating SFBG provided at a stage subsequent to the resonator constituted by the high-reflective fiber Bragg grating FBG-HR and the low-reflective fiber Bragg grating FBG-LR can remove the stimulated Raman scattered light generated by the resonator.

Note that a cladding mode stripper (not illustrated in Fig. 8) for causing the light transitioned to the cladding to leak outside is preferably provided between the slant fiber Bragg grating SFBG and the output end of the amplifying fiber AF. This configuration allows the stimulated Raman scattered light transitioned to the cladding to be quickly escaped to the outside without staying in the cladding.

The slant fiber Bragg grating SFBG and cladding mode stripper configured as described above serve as a filter element for stimulated Raman scattered light.

Note that in Embodiment 3, forward excitation fiber lasers are used as the fiber laser units FLU1 to FLUn. However, the present invention is not limited to such a configuration. That is, in the present invention, backward excitation fiber lasers may be used as the fiber laser units FLU1 to FLUn, or bidirectional excitation fiber lasers may be used as the fiber laser units FLU1 to FLUn.

(Production method S3)

A production method S3 illustrated in Fig. 7, which is a production method for producing the fiber laser system FLS illustrated in Fig. 8, includes steps S31 to S33 (described below) and a heating condition setting method S1 which is carried out between the step S32 and the step S33. Note that the heating condition setting method S1 included in the production method S3 is the same as the heating condition setting method S1 illustrated in Fig. 1, and the description thereof will be therefore omitted in Embodiment 3.

In the step S31, the high-reflective fiber Bragg grating FBG-HR and the low-reflective fiber Bragg grating FBG-LR are formed in the amplifying fiber AF near opposite ends of the amplifying fiber AF.

In the step S32, the slant fiber Bragg grating SFBG is formed in the amplifying fiber AF near one of the opposite ends of the amplifying fiber AF. More specifically, in the step S32, the slant fiber Bragg grating SFBG is formed between the low-reflective fiber Bragg grating FBG-LR and an output end of the amplifying fiber AF, wherein the output end is the one of the opposite ends of the amplifying fiber AF and is closer to the low-reflective fiber Bragg grating FBG-LR.

In the step S33, the high-reflective fiber Bragg grating FBG-HR, the low-reflective fiber Bragg grating FBG-LR, and the slant fiber Bragg grating SFBG are subjected to thermal aging under heating conditions (T, t) set by the heating condition setting method S1.

As described above, the production method S3 includes the setting step of setting the heating conditions (T, t) according to the heating condition setting method S1 and the thermal aging step of subjecting the fiber Bragg gratings to thermal aging under the set heating conditions (T, t). Thus, according to the production method S3, the heating conditions (T, t) for thermal aging can be set such that the respective temperature coefficients $\gamma$ of the high-reflective fiber Bragg grating FBG-HR, the low-reflective fiber Bragg grating FBG-LR, and the slant fiber Bragg grating SFBG subjected to thermal aging are not more than their respective desired upper limits γmax, that is, such that the respective demarcation energies Ed thereof are not less than their respective lower limits Edmin. Further, according to the production method S3, it is possible to produce the fiber laser system FLS that prevents an increase in temperature which may occur during actual use.

Note that in the heating condition setting method S1 included in the production method S3, the respective heating conditions (T, t) set for the high-reflective fiber Bragg grating FBG-HR and the low-reflective fiber Bragg grating FBG-LR are set such that the respective temperature coefficients γ of the fiber Bragg gratings subjected to thermal aging are not more than their respective desired upper limits γmax, that is, such that the respective demarcation energies Ed thereof are not less than their respective lower limits Edmin. Thus, the respective heating conditions (T, t) set for the high-reflective fiber Bragg grating FBG-HR and the low-reflective fiber Bragg grating FBG-LR may be different from each other or may be identical to each other. Note, however, that the low-reflective fiber Bragg grating FBG-LR and the slant fiber Bragg grating SFBG are formed close to each other and are thus subjected to thermal aging under the identical heating conditions (T, t). Thus, for both the low-reflective fiber Bragg grating FBG-LR and the slant fiber Bragg grating SFBG, the respective heating conditions (T, t) are preferably set so as to meet the above requirement.

Note that in a case where it is difficult to set the heating conditions (T, t) for both the low-reflective fiber Bragg grating FBG-LR and the slant fiber Bragg grating SFBG such that the heating conditions (T, t) meet the above requirement, a configuration, as in the fiber Bragg grating 1C (described later with reference to Fig. 9), in which a grating serving as the slant fiber Bragg grating SFBG is formed in an optical fiber which is different from the amplifying fiber FA can be employed.

Further, in the above description in Embodiment 3, the slant fiber Bragg grating SFBG and the cladding mode stripper are formed between the low-reflective fiber Bragg grating FBG-LR and the output end of the amplifying fiber AF. However, the slant fiber Bragg grating SFBG and the cladding mode stripper can be alternatively formed (i) between the high-reflective fiber Bragg grating FBG-HR and the input end of the amplifying fiber AF or (ii) both between the low-reflective fiber Bragg grating FBG-LR and the output end of the amplifying fiber AF and between the high-reflective fiber Bragg grating FBG-HR and the input end of the amplifying fiber AF.

Further, the amplifying fiber AF can contain boron for the purpose of enhancing sensitivity to ultraviolet light. The production method S3 including the heating condition setting method S1 can be suitably used regardless of whether boron is contained in the amplifying fiber AF employed in the fiber laser system FLS.

The production method S3 can alternatively include the heating condition setting method S2 illustrated in Fig. 3, instead of the heating condition setting method S1 illustrated in Fig. 1.

(Second typical example fiber laser system FLS)

As illustrated in Fig. 9, a second typical example fiber laser system FLS includes one (1) fiber laser unit FLU1, instead of the n fiber laser units FLUi included in the first typical example fiber laser system FLS (see Fig. 8). The fiber laser unit FLU1 included in the second typical example fiber laser system FLS is configured in a manner similar to the fiber laser unit FLU1 included in the first typical example fiber laser system FLS. Note, however, that as compared with the fiber laser unit FLU1 included in the fiber laser system FLS, the fiber laser unit FLU1 included in the fiber laser system FLS differs in that the high-reflective fiber Bragg grating FBG-HR, the low-reflective fiber Bragg grating FBG-LR, and the slant fiber Bragg grating SFBG are not formed directly in the amplifying fiber AF, but are formed in separate optical fibers that are different from the amplifying fiber AF.

Thus, as illustrated in Fig. 9, the fiber laser system FLS includes: a fiber Bragg grating 1A that is an optical fiber including a grating which serves as a high-reflective fiber Bragg grating FBG-HR; a fiber Bragg grating 1B that is an optical fiber including a grating which serves as a low-reflective fiber Bragg grating FBG-LR; and a fiber Bragg grating 1C that is an optical fiber including a grating which serves as a slant fiber Bragg grating SFBG. Note that the fiber Bragg gratings 1A and 1B are configured in a manner similar to the fiber Bragg grating 1 illustrated in Fig. 6. Note also that the fiber Bragg grating 1C is configured in a manner similar to the fiber Bragg grating 1, except that a grating contained in a core is inclined with respect to a transverse cross section of the optical fiber.

The fiber Bragg grating 1A has a light-entering end and a light-exiting end. The light-entering end is connected, at a connecting point Pa, to an output port of an excitation combiner PC. The light-exiting end is connected, at a connecting point Pb, to an input end of the amplifying fiber AF. The fiber Bragg grating 1B has a light-entering end and a light-exiting end. The light-entering end is connected, at a connecting point Pc, to an output port of the amplifying fiber. The light-exiting end is connected, at a connecting point Pd, to a light-entering end of the fiber Bragg grating 1C. The fiber Bragg grating 1C has a light-entering end and a light-exiting end. The light-entering end is connected, at the connecting point Pd, to the output end of the fiber Bragg grating 1B. The light-exiting end is connected, at a connecting point Pe, to a light-entering end surface of the output delivery fiber ODF. Note that the optical fibers are connected, at connecting points Pa, Pb, Pc, Pd, and Pe, by fusion splicing.

(Variation of production method S3)

The fiber laser system FLS illustrated in Fig. 9 can be produced by use of a variation which is obtained by changing the production method S3 illustrated in Fig. 7. The following will describe only the changes of the production method S3 illustrated in Fig. 7 into the production method S3 in this variation.

In step S31 included in the production method S3 in this variation, the high-reflective fiber Bragg grating FBG-HR and the low-reflective fiber Bragg grating FBG-LR are formed in two respective optical fibers, instead of being formed in the amplifying fiber AF near opposite ends of the amplifying fiber AF. Note, in the production method S3 in this variation, that unlike the amplifying fiber AF, (i) the optical fiber including the high-reflective fiber Bragg grating FBG-HR and (ii) the optical fiber including the low-reflective fiber Bragg grating FBG-LR are not doped with ytterbium.

In step S32 included in the production method S3 in this variation, the slant fiber Bragg grating SFBG is formed in one (1) optical fiber, instead of being formed in the amplifying fiber AF near one of the opposite ends of the amplifying fiber AF.

Step S33 included in the production method S3 in this variation is identical to the step S33 included in the production method S3 illustrated in Fig. 7.

The production method S3 in this variation further includes, a step, following the step S33, of (1) fusion-splicing the optical fiber including the high-reflective fiber Bragg grating FBG-HR formed therein to the a first end of the amplifying fiber AF, (2) fusion-splicing the optical fiber including the low-reflective fiber Bragg grating FBG-LR formed therein to a second end of the amplifying fiber AF, (3) fusion-splicing the optical fiber including the slant fiber Bragg grating SFBG to an end of the low-reflective fiber Bragg grating FBG-LR which end faces away from the amplifying fiber AF.

The production method S3 in this variation brings about the same effect as the effect brought about by the production method S3 illustrated in Fig. 7. Further, according to the production method S3 in this variation, it is possible to produce the fiber laser system FLS that prevents a temperature rise which may occur during actual use.

As apparent from the description of the production method S3 illustrated in Fig. 7 and the description of the production method S3 in this variation, the production method S3 including the heating condition setting method S1 can be employed in a case where a fiber Bragg grating or a slant fiber Bragg grating is formed in an optical fiber (e.g., amplifying fiber AF) which is doped with ytterbium or can be employed in a case where a fiber Bragg grating or a slant fiber Bragg grating is formed in an optical fiber which is not doped with ytterbium.

Further, in producing the fiber laser system FLS or the fiber laser system FLS, whether (1) three fiber Bragg gratings (high-reflective fiber Bragg grating FBG-HR, low-reflective fiber Bragg grating FBG-LR, and slant fiber Bragg grating SFBG) are to be formed in an amplifying fiber AF which is a single optical fiber (see Fig. 8) or (2) three fiber Bragg gratings are to be formed in respective three separate optical fibers (see Fig. 9) can be determined as appropriate according to the respective heating conditions (T, t) set for, for example, three fiber Bragg gratings. The production method S3 can also employ the configuration in which, of three fiber Bragg gratings, at least one of the high-reflective fiber Bragg grating FBG-HR and the low-reflective fiber Bragg grating FBG-LR is formed in the amplifying fiber, and the other fiber Bragg grating(s) is/are formed in another optical fiber(s).

Aspects of the present invention can also be expressed as follows:

A method for setting a heating condition (heating condition setting method S1, S2) in accordance with an embodiment of the present invention is a method for setting a heating condition for thermal aging of each of fiber Bragg gratings (high-reflective fiber Bragg grating FBG-HR, low-reflective fiber Bragg grating FBG-LR, and slant fiber Bragg grating SFBG), the method including: a step (S11) of, on a basis of a correspondence $\gamma$(Ed) between a temperature coefficient $\gamma$ of each of the fiber Bragg gratings and a demarcation energy Ed of each of the fiber Bragg gratings, determining a lower limit Edmin of the demarcation energy Ed such that the temperature coefficient $\gamma$ is not more than a desired upper limit ymax; and a step (S12, S22) of setting the heating condition (T, t) for thermal aging of each of the fiber Bragg gratings such that the demarcation energy Ed is not less than the lower limit Edmin.

Further, it is preferable that the method for setting a heating condition (heating condition setting method S1, S2) in accordance with an embodiment of the present invention further includes a step (S10) of deriving the correspondence $\gamma$(Ed) from each of temperature coefficients $\gamma$1, $\gamma$2, ..., $\gamma$N of the fiber Bragg gratings which have been subjected to thermal aging until the demarcation energy Ed reaches a corresponding one of preset values Ed1, Ed2, ..., Edn, where n is a natural number of 2 or more.

Further, the method for setting the heating condition in accordance with an embodiment of the present invention is preferably such that the correspondence $\gamma$(Ed) is a correspondence which is linear in at least part of a region.

Further, it is preferable that a method for setting a heating condition (heating condition setting method S2) in accordance with an embodiment of the present invention further includes a step (S21) of, on a basis of a correspondence NCC(Ed) between a normalized integrated coupling constant NCC of each of the fiber Bragg gratings and the demarcation energy Ed of each of the fiber Bragg gratings, determining a lower limit Edmin' of the demarcation energy Ed such that the normalized integrated coupling constant NCC is not more than a desired upper limit NCCmax, the heating condition setting step (S22) being a step of setting a heating condition for thermal aging of each of the fiber Bragg gratings such that the demarcation energy Ed is not less than a value Edmax, the value Edmax being larger one of the lower limit Edmin and the lower limit Edmin'.

Further, a method for producing a fiber Bragg grating (1, 1A, IB, 1C, and an amplifying fiber AF having a high-reflective fiber Bragg grating FBG-HR and a low-reflective fiber Bragg grating FBG-LR formed near opposite ends of the amplifying fiber AF) includes a setting step of setting a heating condition for thermal aging of a fiber Bragg grating according to the above setting method (heating condition setting method S1, S2); and a thermal aging step (S33) of subjecting the fiber Bragg grating to thermal aging such that the heating condition set in the setting step is met.

Further, a method (S3) for producing a fiber laser system (FLS) in accordance with an embodiment of the present invention is a method for producing a fiber laser system which includes at least one fiber laser unit (FLUi), the fiber laser unit including an excitation light source (PSj), an amplifying fiber (AF), and two fiber Bragg gratings (FBG-HR, FBG-LR) which cause the amplifying fiber to serve as a resonator and have different reflectances, the method including a step of producing each of the two fiber Bragg gratings by using the method for producing a fiber Bragg grating in accordance with an embodiment of the present invention.

Further, the method (S3) for producing a fiber laser system in accordance with an embodiment of the present invention is preferably such that the fiber laser unit (FLUi) further includes a slant fiber Bragg grating (SFBG) which loses stimulated Raman scattered light corresponding to a laser beam generated by the amplifying fiber (AF) with a higher priority than the laser beam, and the method further includes a step of producing the slant fiber Bragg grating by using the method for producing a fiber Bragg grating in accordance with an embodiment of the present invention.

[Supplemental Notes]

The present invention is not limited to the embodiments, but can be altered within the scope of the claims. The present invention also encompasses, in its technical scope, any embodiment derived by combining technical means disclosed in differing embodiments.

Reference Signs List

S1: Heating condition setting method
S10: Step of deriving a correspondence γ(Ed)
S11: Step of determining a lower limit Edmin of demarcation energy Ed
S12: Step of setting a heating condition (T, t)
S2: Heating condition setting method
S21: Step of deriving a correspondence NCC(Ed)
S22: Step of determining a lower limit Edmin' of demarcation energy Ed
S23: Step of setting a heating condition (T, t)
S3: Production method
S31: Step of forming a fiber Bragg grating
S32: Step of forming a slant fiber Bragg grating
S33: Step of subjecting a fiber Bragg grating to thermal aging

## Claims

**1.** A method for setting a heating condition for thermal aging of each of fiber Bragg gratings, comprising:

a step of, on a basis of a correspondence γ(Ed) between a temperature coefficient γ of each of the fiber Bragg gratings and a demarcation energy Ed of each of the fiber Bragg gratings, determining a lower limit Edmin of the demarcation energy Ed such that the temperature coefficient γ is not more than a desired upper limit γmax; and
a step of setting the heating condition for thermal aging of each of the fiber Bragg gratings such that the demarcation energy Ed is not less than the lower limit Edmin.

**2.** The method according to claim 1, further comprising:
a step of deriving the correspondence y(Ed) from each of temperature coefficients γ1, γ2, ..., γn of the fiber Bragg gratings which have been subjected to thermal aging until the demarcation energy Ed reaches a corresponding one of preset values Ed1, Ed2, ..., Edn, where n is a natural number of 2 or more.

**3.** The method according to claim 1 or 2, wherein the correspondence γ(Ed) is a correspondence which is linear in at least part of a region.

**4.** The method according to any one of claims 1 to 3, further comprising:

a step of, on a basis of a correspondence NCC(Ed) between a normalized integrated coupling constant NCC of each of the fiber Bragg gratings and the demarcation energy Ed of each of the fiber Bragg gratings, determining a lower limit Edmin' of the demarcation energy Ed such that the normalized integrated coupling constant NCC is not more than a desired upper limit NCCmax,
the heating condition setting step being a step of setting a heating condition for thermal aging of each of the fiber Bragg gratings such that the demarcation energy Ed is not less than a value Edmax, the value Edmax being larger one of the lower limit Edmin and the lower limit Edmin'.

**5.** A method for producing a fiber Bragg grating, comprising:

a setting step of setting a heating condition for thermal aging of a fiber Bragg grating according to a method for setting a heating condition according to any one of claims 1 to 4; and
a thermal aging step of subjecting the fiber Bragg grating to thermal aging such that the heating condition set in the setting step is met.

**6.** A method for producing a fiber laser system which comprises at least one fiber laser unit, the fiber laser unit including an excitation light source, an amplifying fiber, and two fiber Bragg gratings which cause the amplifying fiber to serve as a resonator and have different reflectances,
said method comprising:
a step of producing each of the two fiber Bragg gratings by using the method for producing a fiber Bragg grating according to claim 5.

**7.** The method according to claim 6, wherein
the fiber laser unit further includes a slant fiber Bragg grating which loses stimulated Raman scattered light with a higher priority than a laser beam generated by the amplifying fiber, the stimulated Raman scattered light having a wavelength corresponding to a wavelength of the laser beam, and
said method further comprises the step of producing the slant fiber Bragg grating by using the method for producing a fiber Bragg grating.

FIG. 1

S1
START
DERIVE CORRESPONDENCE γ (Ed) BETWEEN TEMPERATURE COEFFICIENT γ AND DEMARCATION ENERGY Ed
S10
DETERMINE LOWER LIMIT Edmin OF DEMARCATION ENERGY Ed SUCH THAT TEMPERATURE COEFFICIENT γ IS NOT MORE THAN DESIRED UPPER LIMIT γmax
S11
SET HEATING CONDITION (T, t) SUCH THAT DEMARCATION ENERGY Ed IS NOT LESS THAN LOWER LIMIT Edmin
S12
END

FIG. 2

(a)
TEMPERATURE COEFFICIENT (℃/W)
0.35
0.3
0.25
0.2
0.15
0.1
0.05
0
1.5
1.6
1.7
1.8
1.9
2.0
2.1
2.2
2.3
DEMARCATION ENERGY Ed
(b)
TEMPERATURE COEFFICIENT (℃/W)
0.25
0.2
0.15
0.1
0.05
0
1.5
1.7
1.9
2.1
2.3
DEMARCATION ENERGY Ed

FIG. 3

S2
START
DERIVE CORRESPONDENCE NCC(Ed) BETWEEN NCC AND DEMARCATION ENERGY Ed
S20
DETERMINE LOWER LIMIT Edmin' OF DEMARCATION ENERGY Ed SUCH THAT NCC IS NOT MORE THAN DESIRED UPPER LIMIT NCCmax
S21
DERIVE CORRESPONDENCE γ(Ed) BETWEEN TEMPERATURE COEFFICIENT γ AND DEMARCATION ENERGY Ed
S10
DETERMINE LOWER LIMIT Edmin OF DEMARCATION ENERGY Ed SUCH THAT TEMPERATURE COEFFICIENT γ IS NOT MORE THAN DESIRED UPPER LIMIT γmax
S11
SET HEATING CONDITION (T, t) SUCH THAT DEMARCATION ENERGY Ed IS NOT LESS THAN LOWER LIMIT Edmax
S22
END

FIG. 4

(a)
0.5
0.4
0.3
0.2
0.1
0
ICCΓdB]
0
500
1000
1500
2000
AGING TIME[sec]
250℃
300℃
350℃
(b)
1.2
1
0.8
0.6
0.4
0.2
0
ncc(dB)
0
500
1000
1500
2000
AGING TIME(sec)
250℃
300℃
350℃

FIG. 5

1.05
1
0.95
0.9
0.85
0.8
0.75
0.7
0.65
0.6
NCC[dB]
0.0
0.5
1.0
1.5
2.0
2.5
3.0
3.5
DEMARCATION ENERGY Ed[eV]
250℃
300℃
350℃
375℃
400℃
NCC CALCULATED VALUE

FIG. 6

1
11
12
11a

FIG. 7

S3
START
FORM HIGH-REFLECTIVE FIBER BRAGG GRATING AND LOW-REFLECTIVE FIBER BRAGG GRATING IN AMPLIFYING FIBER NEAR OPPOSITE ENDS OF THE AMPLIFYING FIBER
S31
FORM SLANT FIBER BRAGG GRATING IN AMPLIFYING FIBER NEAR ONE OF THE OPPOSITE ENDS OF THE AMPLIFYING FIBER
S32
DERIVE CORRESPONDENCE γ(Ed) BETWEEN TEMPERATURE COEFFICIENT γ AND DEMARCATION ENERGY Ed
S10
S1
DETERMINE LOWER LIMIT Edmin OF DEMARCATION ENERGY Ed SUCH THAT TEMPERATURE COEFFICIENT γ IS NOT MORE THAN DESIRED UPPER LIMIT γmax
S11
SET HEATING CONDITION (T, t) SUCH THAT DEMARCATION ENERGY Ed IS NOT LESS THAN LOWER LIMIT Edmin
S12
SUBJECT FIBER BRAGG GRATINGS AND SLANT FIBER BRAGG GRATING TO THERMAL AGING UNDER SET HEATING CONDITIONS (T, t)
S33
END

FIG. 8

FLU1
PS1
PS2
PS3
PS4
PS5
PS6
PDF1
PDF2
PDF3
PDF4
PDF5
PDF6
I1
CS1
AF
P1a
SFBG
P1b
PC
FBG-HR
FBG-LR
FLS
LDF1
FLU2
I2
ODF
LDF2
OC
W
OH
LDF7
FLU7
I7

FIG. 9

FLS
FLU1
AF
ODF
PDF1
PDF2
PDF3
PS1
PS2
PS3
I1
CS1
PS4
PS5
PS6
1A
1B
1C
Pa
Pb
Pc
Pd
Pe
PC
FBG-HR
FBG-LR
SFBG
PDF4
PDF5
PDF6
W
OH

## INTERNATIONAL SEARCH REPORT

International application No. PCT/JP2018/028578

A. CLASSIFICATION OF SUBJECT MATTER
Int. Cl. G02B6/02(2006.01)i

According to International Patent Classification (IPC) or to both national classification and IPC

B. FIELDS SEARCHED

Minimum documentation searched (classification system followed by classification symbols)
Int. Cl. G02B6/02

Documentation searched other than minimum documentation to the extent that such documents are included in the fields searched
Published examined utility model applications of Japan 1922-1996
Published unexamined utility model applications of Japan 1971-2018
Registered utility model specifications of Japan 1996-2018
Published registered utility model applications of Japan 1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | US 2004/0161195 A1 (BERNARD, Pierre) 19 August 2004, entire text, all drawings & CA 2418888 A1 & CA 2447169 A1 | 1-7 |
| A | RATHJE, Jacob et al. Continuous anneal method for characterizing the thermal stability of ultraviolet Bragg gratings, JOURNAL OF APPLIED PHYS ICS, 2000.07.15, Vo l. 88, No. 2, pp. 1050 - 1055 | 1-7 |
| A | JP 2004-325796 A (SUMITOMO ELECTRIC INDUSTRIES, LTD.) 18 November 2004, entire text, all drawings (Family: none) | 1-7 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17.08.2018 | 28.08.2018 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5298238 B
- JP 3153083 B


### Non-patent literature cited in the description


- **T. ERDOGAN et al.** Decay of ultraviolet induced fiber Bragg gratings. *Journal of Applied Physics,* 1994, vol. 76, 73